# EUROPEAN PATENT SPECIFICATION

(11) **EP 1 392 023 B1**
(45) Date of publication and mention of the grant of the patent: **10.05.2006**
(21) Application number: 03254867.9
(22) Date of filing: 05.08.2003
(51) Int. Cl.: H04L 12/28, H04L 12/56

(54) **Short range wireless communication**
Drahtlose Kommunikation mit kurzer Reichweite
Communication sans fil à courte portée

(30) Priority: 20.08.2002 US 224768
(43) Date of publication of application: 25.02.2004
(73) Proprietor: Nokia Corporation, 02150 Espoo (FI)
(72) Inventor: Reunamäki, Jukka, 33720 Tampere (FI); Salokannel, Juha, 36240 Kangasala (FI); Lappeteläinen, Antti, 02200 Espoo (FI); Smolander, Visa Tapio, 90630 Oulu (FI)
(74) Representative: Derry, Paul Stefan

(56) References cited:
- EP-A- 1 113 690
- EP-A- 1 193 951
- WO-A-02/073893
- US-A- 5 636 223
- US-A- 5 870 388
- TRITTON J A: "Interactive home systems (IHS)-voice and data services" IEEE, 11 September 1988 (1988-09-11), pages 108-112, XP010071871
- NASIPURI A ET AL: "A multichannel CSMA MAC protocol for multihop wireless networks" WIRELESS COMMUNICATIONS AND NETWORKING CONFERENCE, 1999. WCNC. 1999 IEEE NEW ORLEANS, LA, USA 21-24 SEPT. 1999, PISCATAWAY, NJ, USA,IEEE, US, 21 September 1999 (1999-09-21), pages 1402-1406, XP010353705 ISBN: 0-7803-5668-3
- LO F L ET AL: "Performance of multichannel CSMA networks" INFORMATION, COMMUNICATIONS AND SIGNAL PROCESSING, 1997. ICICS., PROCEEDINGS OF 1997 INTERNATIONAL CONFERENCE ON SINGAPORE 9-12 SEPT. 1997, NEW YORK, NY, USA,IEEE, US, 9 September 1997 (1997-09-09), pages 1045-1049, XP010263936 ISBN: 0-7803-3676-3

## Description

This invention relates to a method of operating a device in a short range wireless communication system. The invention relates also to a device operable in a system implementing short range wireless communication.

Wireless devices that transmit within a certain operating proximity may experience transmission collisions if the transmissions of each device are sent at substantively the same time and on the same channel. The resulting collisions are unintelligible by receiver devices and contribute to inefficient power consumption in the transmitting device. Implementation of carrier sensing multiple access with collision detection (CSMA/CD) or collision avoidance (CSMA/CA) involves two methods of addressing transmission timing issues. However, in the implementations of the carrier sensing associated with CSMA/CD and CSMA/CA, the success rate of detecting other devices within a predetermined transmission/reception range may be improved. Additionally, the device connection/setup times associated with the devices implementing these protocols is less than ideal.

WO-A-02/073893 discloses a Bluetooth system comprising devices which fall into difference device classes.

EP-A-1,193,951 discloses selecting a serving network element in a telecommunications network, where the network may employ WLAN.

EP-A-1,113,690 discloses monitoring data traffic, where the time interval of an inquiry scan depends on the amount of traffic.

The present invention is directed to a device and a method for implementing a short range wireless communication system.

According to a first aspect of the invention, there is provided a device as claim in claim 20.

According to a second aspect of the present invention, there is provided a method of operating a device in a wireless communication system, as claimed in claim 1.

An exemplary method for implementing a short range wireless communication system, comprises conducting carrier sensing on a channel, wherein the carrier sensing incorporates a random zero mean value offset.

An exemplary method for a short range wireless device to communicate on a communication link comprises after establishing a communication link on an initialisation channel, tuning from an initialisation channel to a unicast channel. Another aspect of the method includes re-establishing the communication link on the initialisation channel in the event of a data transmission error in the first packet on the unicast channel. Re-establishing the communication link comprises selecting a random number from an initial range of values, wherein the random number corresponds to a number of wait time periods a receiving device will wait before attempting to re-establish a connection. After a value is selected, the method includes waiting for a length of time equal to the number of wait time periods. The method handles the event in which the receiving device, after waiting the length of time, does not receive an expected transmission, and accordingly increases an upper bound of the initial range.

Thus, in order to avoid possible collisions and conserve power, an optimized version of Carrier Sensing Multiple Access with Collision Avoidance is provided. In particular, in one embodiment, a random mean zero value offset is appended to the start of carrier sensing at the beginning of a transmission frame to increase the likelihood that transmitters within a transmission range will recognize one another's overlapping transmissions and shift their transmission frames to avoid collisions. The transmitters thereby increase the transmission success rate and reduce the connection setup time.

Other and further aspects of the present invention will become apparent during the course of the following description and by reference to the attached drawings, in which:
Figure 1 is a block diagram illustrating a LowRate Service Advertiser device establishing a short range communication link with a LowRate Initiator device;
Figure 2 illustrates two exemplary message packets for use in an embodiment of the present invention;
Figure 3A illustrates an exemplary operating frequency spectrum for an implementation of an embodiment of the present invention;
Figure 3B is a table illustrating an exemplary assignment of operating channels for use in one embodiment of the present invention;
Figure 4 is a table illustrating an exemplary relationship between the LowRate device transmission power and the transmission interval for an embodiment of the present invention;
Figure 5 is an exemplary operation diagram of an embodiment of the present invention;
Figure 6A illustrates an exemplary operation topology for a StandAlone LowRate device;
Figure 6B illustrates an exemplary operation topology for a DualMode LowRate device;
Figure 7A illustrates an exemplary use of a random mean zero value offset with carrier sensing when a first device is detected by a second device in one embodiment of the present invention;
Figure 7B illustrates an exemplary use of a random mean zero value offset with carrier sensing when a first device detects a second device in an alternate embodiment of the present invention;
Figure 8 illustrates an exemplary use of a random mean zero value offset with carrier sensing in which a first device is detected by a second device which, in turn, cycles through alternate Initialisation channels;
Figure 9 illustrates an exemplary use of a random mean zero value offset with carrier sensing in which a first device is detected by a second device which, in turn, enters a continuous scan mode; and
Figure 10 is a flow chart illustrating an exemplary method by which collision handling may be performed in accordance with one embodiment of the present invention.

In the following description of the various embodiments, reference is made to the accompanying drawings which form a part hereof, and in which is shown by way of illustration various embodiments in which the invention may be practiced. It is to be understood that other embodiments may be utilized and structural and functional modifications may be made without departing from the scope of the present invention.

### Overview

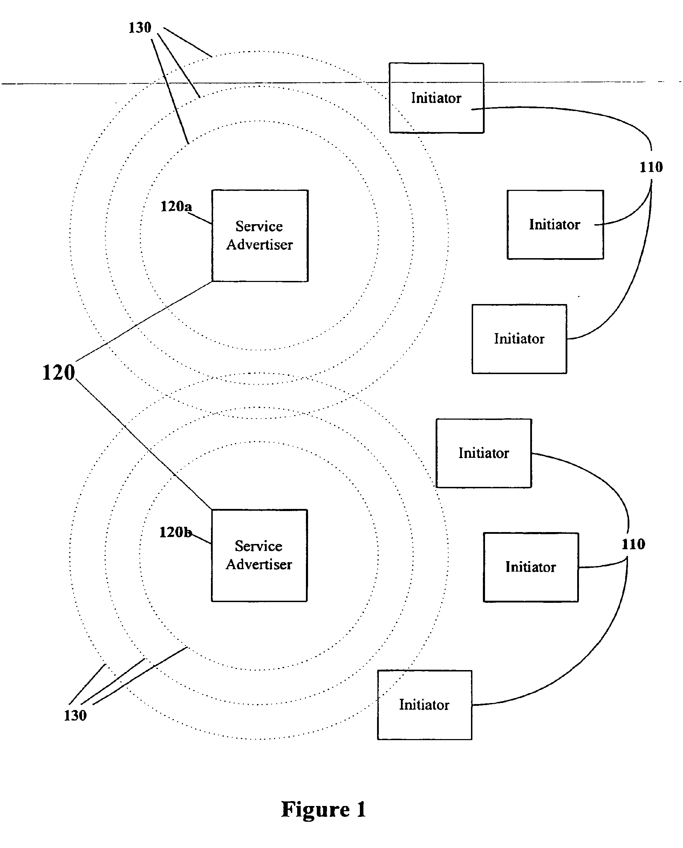

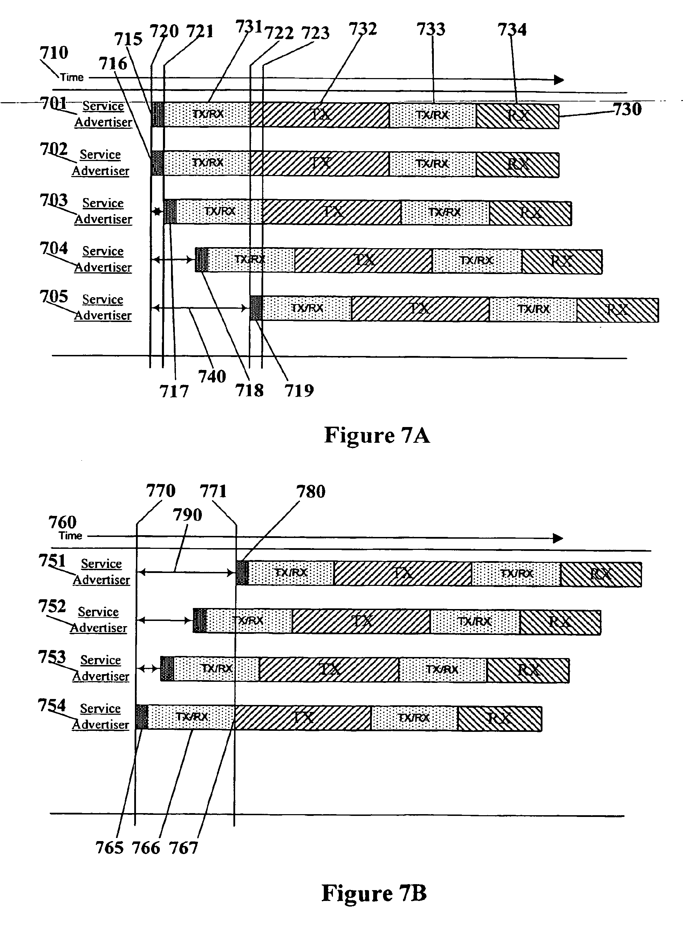

The embodiments are directed to a LowRate protocol and the methods and systems for providing low power consumption with optimized collision avoidance for a short range wireless communication system enabling communication between Service Advertiser devices and Initiator devices. LowRate refers to the low power consumption parameters associated with devices implementing the LowRate protocol as compared to a typical Bluetooth device. Figure 1 is an exemplary embodiment of the present invention wherein one or more of a multiplicity of LowRate Initiator devices 110 establishes a communication link with a LowRate Service Advertiser device 120. The Service Advertiser 120 may be, e.g., a banner advertisement located on a public thoroughfare broadcasting advertisements that inform the Initiator devices 110 within a given coverage area of the availability of additional data or advertised services. A first Service Advertiser 120a begins transmitting on a primary Initialisation channel. If another Service Advertiser 120b is already transmitting on the primary Initialisation channel as determined by the first Service Advertiser 120a through carrier sensing, the second Service Advertiser 120b will execute a predetermined number of transmission reattempts after a delay between attempts. If after the predetermined number of reattempts the primary Initialisation channel is still determined to be congested, transmission reattempts with carrier sensing may be executed on an alternate channel. In order to increase the likelihood that a first Service Advertiser 120a using carrier sensing will recognize that a second Service Advertiser 120b is transmitting simultaneously on the Initialisation channel, the first Service Advertiser 120a will append a random mean zero value offset time to the start of the carrier sensing mode in a transmission frame. The offset allows for devices with similar transmission frames to shift their carrier sensing to increase the likelihood that a first Service Advertiser 120a will be conducting carrier sensing while a second Service Advertiser 120b is transmitting on an Initialisation channel. The limits of the random mean offset time value distribution are optimized according to system properties. While increasing the offset value from zero, the possibility of detecting other devices increases. However, increasing the offset value greater then Transmit/Receive switching period decreases system capacity. Thus, the Transmit/Receive switching time is the optimal maximum time value for the random mean offset (Figures 7A, 7B, 8 and 9). If carrier sensing determines that a second Service Advertiser 120b is already transmitting on an Initialisation channel, the channel is designated as BUSY, and the first Service Advertiser 120a will execute a predetermined step or number of steps as described further in Figure 7A, 7B, 8 and 9 to reattempt carrier sensing or cycle through alternate Initialisation channels, searching for a channel to transmit on. Otherwise, if carrier sensing determines that no Service Advertiser 120 is transmitting on the Initialisation channel, the channel is designated IDLE, and transmission of service advertisements may commence.

The above-mentioned LowRate Initiator devices 110 may be wireless devices, such as Personal Digital Assistants (PDA), cell phones, laptop computers or the like. An Initiator device 110 receives the transmitted service advertisements and determines whether or not to respond to them based on user input requesting additional services or data from the Service Advertiser 120. Thus, the Initiator device 110 is responsible for initiating a request for additional services or data on a given unicast channel with the Service Advertiser 120. Various aspects of the present invention will now be described in greater detail.

### Detailed Description of Device Structure

As discussed in the Overview section, in Figure 1, two Service Advertisers 120 are shown, along with a multiplicity of Initiator devices 110. Each Service Advertiser 120 is capable of establishing an active short range wireless connection with one or more Initiator devices 110. The dotted circles 130 shown in Figure 1 represent Service Advertiser 120 transmissions, as it advertises its ability to provide further data or a service pertaining to a particular subject. The Service Advertiser 120 is capable of transmitting different types of message packets for reception by the Initiator devices 110.

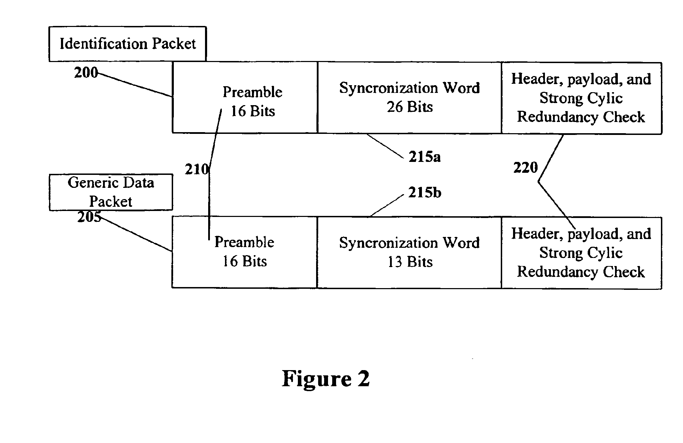

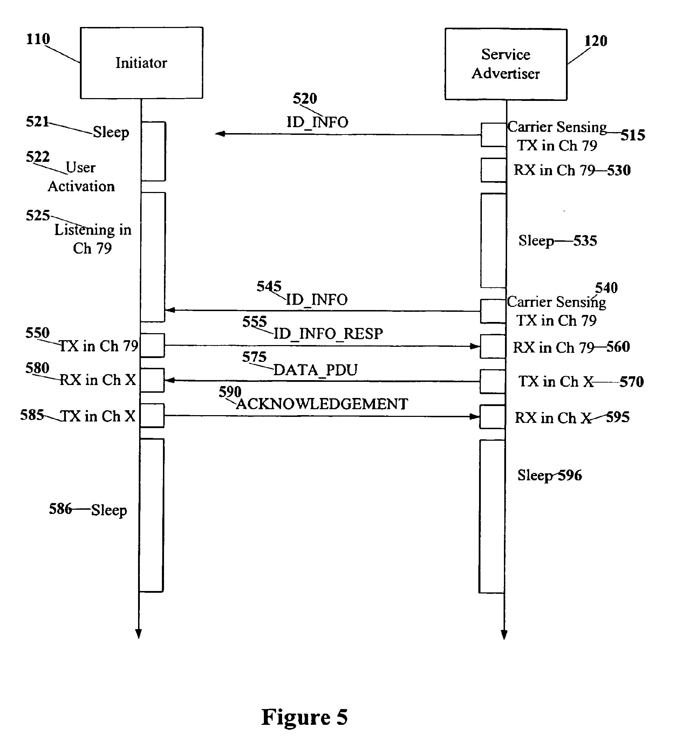

Figure 2 illustrates two exemplary message packets for use in one embodiment of the present invention. The two message packets in Figure 2 are an identification message (packet) 200 and a generic data message (packet) 205, as will be described in detail hereinafter. The identification message 200 comprises a 16-bit preamble 210, a 26-bit synchronization word 215a, and a section designated for header, payload and strong cyclic redundancy check data 220. The identification message also includes the address of the device that transmits the message. In one embodiment, Service Advertisers 120 use the identification message 200 to advertise the availability of additional data and services to Initiator devices 110. An Initiator device 110 will respond by transmitting an identification response message specifying the unicast data transfer and service provider channel ("unicast channel") that it has designated for data transfer. The transmission of these messages during operation is detailed further in Figure 5. Upon receipt of the response, the Service Advertiser 120 shirts to the unicast channel specified in the identification response message by the Initiator device 110. Service Advertiser 120 provides the additional data or services on the unicast channel using the generic data message packet 205 shown in Figure 2. The generic data message 205 includes the same 16-bit preamble 210 as the identification message 200, but utilizes a 13-bit synchronization word 215b, rather than a 26-bit synchronization word 215a. A header, payload and strong cyclic redundancy check 220 are also included in the generic data message.

The 16-bit preamble and the difference in synchronization word lengths of the LowRate message packet formats illustrate design tradeoffs between network throughput and device complexity/power consumption. The standard Bluetooth 1.1 packet format uses a 4-bit preamble, which has been optimized for more efficient network performance in regard to transmission of special data such as voice or streaming video. In order to resolve the transmitted preamble value in a Bluetooth implementation, it is necessary to use a large advanced digital DC estimator, thereby increasing the complexity and power consumption associated with Bluetooth devices. In contrast, a LowRate device uses a 16-bit preamble 210 that can be resolved using an analogue DC estimator, which consumes less power.
The Initiator Device 110 uses the preamble 210 to perform frequency synchronization, symbol timing estimation, and Automatic Gain Control (AGC) training.

The 13-bit synchronization word 215b of the generic data message and the 26-bit synchronization word 215a of the identification message are implemented using one or two consecutive 13-bit Barker codes, respectively. In the 26-bit synchronization word 215a, the second Barker code is the inverse of the first Barker code. The difference in the synchronization words reflects the different purposes for which each is used. The longer synchronization word 215a of the identification message 200 minimizes the probability of false synchronization, wherein random noise is incorrectly identified by the system as a synchronization word. Because the synchronization word 215b used in the generic data message 205 is used for device-to-device synchronization, the length of the synchronization word 215b may be shorter. Strong Cyclic Redundancy Check 220 also provides a method of stopping a false synchronization match as will be discussed in further detail below.

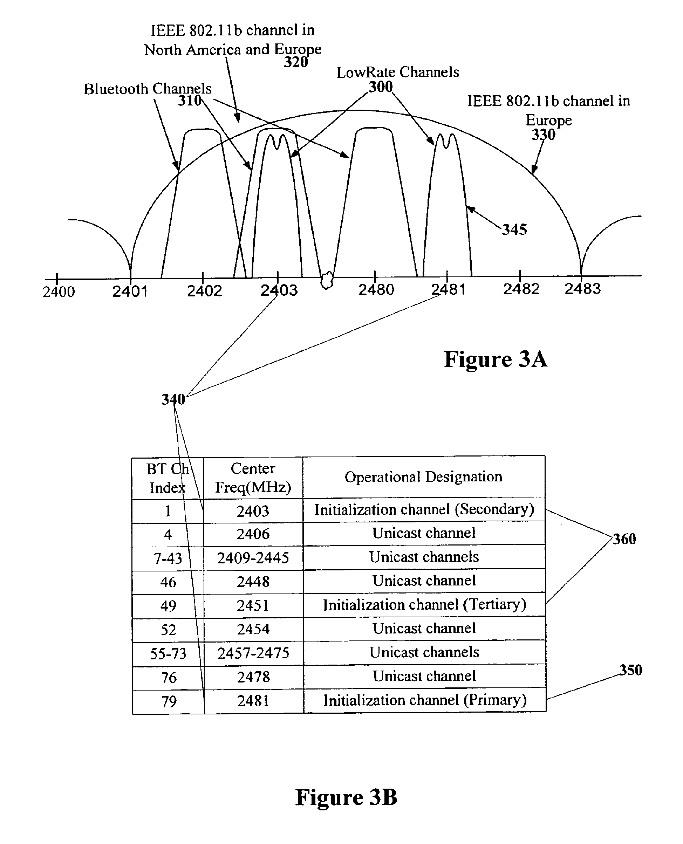

As illustrated in Figure 3A, in one embodiment of the present invention, the LowRate protocol message transmission occurs on a similar operating frequency band as current Bluetooth systems. The Bluetooth 1.1 specification defines the use of radio frequency channels in the 2400-2483.5 MHz band with centre frequencies ranging from 2402 + k * 1 MHz, where k = 0...78,310. In the embodiment shown in Figure 3A, the LowRate protocol operating frequency range of 2403 MHz through 2481 MHz is divided into twenty-seven channels, wherein each channel is 3 MHz wide. The implementation of the LowRate protocol at these operating frequencies allows for the LowRate protocol to be incorporated on a device that also has an existing Bluetooth System capability.

Figure 3B is a table illustrating an exemplary assignment of operating channels in one embodiment of the present invention. In the embodiment shown in Figure 3B, the LowRate protocol channels are divided into Initialisation channels and Unicast channels. An Initialisation channel is used to transmit identification messages 200 and to make the initial contact between Service Advertisers 120 and Initiator devices 110. In contrast, a unicast channel is used to transmit generic data messages 205, which contain information such as the additional data or services requested by the Initiator device 110 or, alternatively, the Initiator device's 110 response to receipt of such additional data or services. In accordance with one embodiment of the present invention, a LowRate device - either Service Advertiser 120 or Initiator device 110 - may employ the frequency channels set forth in Figure 3B to transmit identification or generic data messages.

Two of the benefits gained by using these operating frequencies relate to reduced interference on the Initialisation channels. The outermost channels used by the LowRate devices are located at 2403 MHz and 2481 MHz 340. These channels are near the minimum of the power spectrum used for IEEE 802.11 b WLAN transmissions 320, 330. Consequently, the interference with LowRate transmissions due to IEEE 802.11b WLAN transmissions is minimized. A second advantage relates to the primary Initialisation channel. As will be discussed hereinafter, more than one channel may be designated as an Initialisation channel and one of the plurality may be a default or primary Initialisation channel. In the embodiment illustrated in Figure 3B, the 2481 MHz channel 345 is selected as the primary Initialisation channel used for transmitting service advertisements to avoid any co-channel interference between it and any of the Bluetooth channels.

As further shown in Figure 3B, three channels, one in the lower end, one in the upper end, and one in the middle of the operating spectrum are designated as Initialisation channels. In addition to the primary Initialisation channel 350 discussed above, secondary and tertiary Initialisation channels at 2403 MHz and 2451 MHz 360, respectively, are selected as alternate Initialisation channels for use in the event that carrier sensing determines that the primary Initialisation channel is BUSY.

More specifically, after designating the primary Initialisation channel at the upper end of the operating spectrum (2481 MHz), the secondary Initialisation channel is designated at the lower end of the operating spectrum (2403 MHz). The tertiary Initialisation channel is then selected at 2451 MHz in the middle of the operating spectrum to separate the Initialisation channels as much as possible and to avoid LowRate co-channel interference among LowRate devices and interference from other devices operating in the global unlicensed Industrial Scientific and Medical (ISM) band at 2400-2483.5 MHz. As further illustrated in Figure 3B, the other twenty-four operating channels are designated as Unicast channels and are used in transmitting the above-described generic data packets in fulfilment of an Initiator device's 110 request for additional data or services. A detailed description of the channel operation in accordance with the present invention will be discussed below in connection with Figure 5.

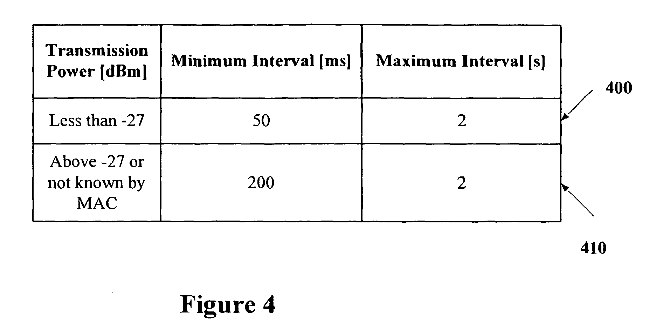

Figure 4 is a table illustrating an exemplary relationship between the LowRate device transmission power and the transmission frame interval (i.e., the time between transmission frames) for service advertisement transmission frames in an embodiment of the present invention. As indicated in row 400, if a Service Advertiser's 120 transmission power is less than -27 dBm, the range of transmission frame intervals may extend from 50 milliseconds to 2 seconds. Alternatively, as indicated in row 410, if the transmission power is above -27 dBm or if the medium access control layer of the data link layer does not know the transmission power of the device, the range of the transmission frame intervals may extend from 200 milliseconds to 2 seconds.

The transmission frame interval, which is considered to be an application-specific design trade-off between power consumption and connection speed, may be, but is not limited to, any multiple of the minimum transmission period. Smaller latencies between device transmissions translate into shorter connection setup times. On the other hand, if service advertisements are sent more frequently, the level of power consumed for the additional transmissions also increases. Additionally, the medium access control layer of the data link control layer may add a predetermined hysteresis value to the transmission period, for example +/- 0.5ms, in order to expedite recovery time from overlapping service advertisements.

### Detailed Description of Operation

One of the design goals of the LowRate protocol involves achieving an implementation with a very low level of power consumption during carrier sensing as compared with typical Bluetooth power consumption levels. Carrier sensing involves measuring the Received Signal Strength Indication (RSSI) on an Initialisation channel over a time interval (e.g., µ sec). The measured value of the RSSI is then compared with a predetermined threshold in order to determine whether the Initialisation channel is IDLE (i.e., the measured value is below the threshold and thus the Service Advertiser 120 may transmit); or the channel is BUSY (i.e., the measured value is above the threshold and thus the Service Advertiser 120 may not transmit). The predetermined threshold may be a value less than or equal to an RSSI that would interfere with a Service Advertiser's transmissions (e.g., -60dBm). The designation BUSY indicates that if a Service Advertiser was to transmit, the transmissions would experience interference from other energy on the channel.

As will be discussed in detail hereinafter, the LowRate protocol's low level of power consumption is achieved through the use of periodic Service Advertiser 120 transmission frames optimized with a random mean zero value offset appended to the start of carrier sensing. Conducting carrier sensing with a random mean zero value offset assists in avoiding transmission collisions, thereby decreasing the level of power consumed during periodic transmissions. The random mean zero value offset allows for Service Advertisers 120 within close proximity of one another, (e.g., the distance within which one Service Advertiser's 120 transmissions could interfere with another Service Advertiser's 120 transmissions) to adjust transmission frames in order to increase the likelihood that carrier sensing will detect a transmission on an Initialisation channel and thus avoid collisions.

Carrier sensing offsets will be discussed further below in connection with Figure 7A, 7B, 8 and 9.

Figure 5 is an exemplary operation diagram of one embodiment of the present invention, wherein a Service Advertiser 120 attempts advertise services or information to an Initiator device 110 by sending out identification messages during periodic transmission frames. In one embodiment, a transmission frame comprises a set of 5 or 6 different modes that a Service Advertiser 120 will cycle through as will be discussed in detail in connection with Figure 7A. As shown in Figure 5, Service Advertiser 120 conducts carrier sensing on the primary Initialisation channel and if the channel is IDLE, transitions from the carrier sensing mode to a transmit mode of the transmission frame. (515) During the transmit mode, the Service Advertiser 120 transmits an identification message ("ID_INFO") on the primary Initialisation channel. (520) After transmitting the ID_INFO message, Service Advertiser 120 transitions from the transmit mode into a receive mode of the transmission frame. (530) During the receive mode, the Service Advertiser 120 listens to the initialisation channel for a response from an Initiator device 110. If a response is not received, the Service Advertiser 120 switches into a sleep mode of the transmission frame, thereby conserving power for the remainder of the transmission frame. (535) The Service Advertiser 120 sends transmission frames repeatedly in accordance with an application-specific transmission period, such as one of the intervals set forth in Figure 4.

Similarly, in order to achieve a low level of power consumption, if the user of an Initiator device 110 does not want to receive service advertisements, the user may have the option of placing the Initiator Device 110 into a sleep mode. (521) Accordingly, when in a sleep mode, the Initiator device 110 ignores service advertisements from Service Advertisers 120. The user would then activate Initiator device 110 to receive service advertisements. (522) Upon activation, the Initiator device 110 enters a listening mode on the primary Initialisation channel wherein it listens to that channel for service advertisements. (525) Alternatively, in other embodiments, or in embodiments in which power consumption is less of a design concern, the Initiator device 110 may be in an "always-on" listening mode, wherein it always scans an Initialisation channel for service advertisements.

As further shown in Figure 5, having entered a sleep mode, Service Advertiser 120 waits until the start of a new transmission frame, at which time it emerges from the sleep mode to once again conduct carrier sensing on the primary Initialisation channel. (540) In the event that the Initialisation channel is BUSY during carrier sensing 540, the Service Advertiser 120 repeats carrier sensing a predetermined number of times after a delay (e.g. 1 ms), to expedite connection time with an Initiator device 110. Further, if the Service Advertiser 120 conducts carrier sensing a predetermined number of times and is unable to transmit its ID_INFO 545 message, it may attempt to carrier sense on an alternate Initialisation channel.

In the exemplary embodiment shown in Figure 5, upon determining that the primary Initialisation channel is IDLE, Service Advertiser 120 transmits an ID_INFO message to advertise the availability of certain data and services. (545) Having been activated by the user, the Initiator device 110 receives the ID_INFO message from the Service Advertiser 120. Upon receipt, the Initiator device 110 processes the message, and relays the advertised data or services to the user through a user interface such as a display. In the event that the user does not request additional information from the Service Advertiser 120, the Initiator device 110 will return to either a sleep mode or remain active to listen for other service advertisements. In the event, however, that the user desires additional information concerning the services or data being advertised, the Initiator device 110 transmits a response message ("ID_INFO_RESP") to the Service Advertiser 120 on the initialisation channel. (550, 555, 560) The ID_INFO_RESP message, includes the value "X" of a unicast channel selected by the Initiator device 110 for data reception.

Service Advertiser 120 will then transmit the requested data to the Initiator device 110 over the specified unicast channel based on a polling scheme. (570) The process of polling, in general, involves a first device periodically retransmitting a message on a channel until it receives a response from a second device.

After tuning to the unicast channel X, the Service Advertiser 120 periodically transmits a DATA_PDU message to the Initiator device 110 until it receives a response or an application device specific time-out expires while waiting for a response. (570, 575) The DATA_PDU message contains the data related to the advertisements on the Initialisation channel. After tuning to channel X, the Initiator device 110 receives the DATA_PDU message (580) and transmits an ACKNOWLEDGEMENT message (generic data message with Acknowledgement information) to Service Advertiser device 120 indicating that the data transfer has been completed and that therefore the wireless connection may be terminated. (585, 590)

After transmitting the ACKNOWLEDGEMENT message, the Initiator device 110 may return to a sleep mode. (596) Alternately, the Initiator device 110 may resume listening on an Initialisation channel. Similarly, upon receipt of the ACKNOWLEDGEMENT message the Service Advertiser 120 also may return to a sleep mode. (585, 586) The Service Advertiser 120 remains in a sleep mode until it is once again time to conduct carrier sensing as dictated by the transmission frame interval, at which time the process of Figure 5 is repeated.

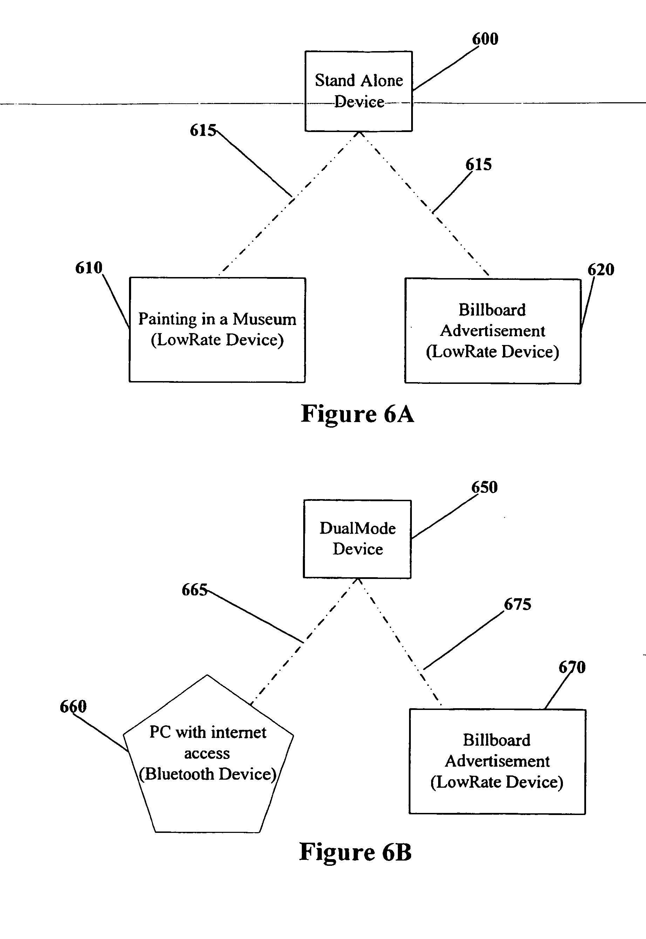

Figure 6A illustrates an exemplary operation topology for a StandAlone LowRate device 600. In the embodiment illustrated in Figure 6A, the StandAlone device 600 is capable of conducting short range wireless communications via LowRate connections 615 with other LowRate devices. As shown in Figure 6A, a connection 615 may be between the StandAlone Low Rate Device 600 and a painting in a museum 610. In the museum application, a Service Advertiser 120 may advertise recorded descriptions of paintings to any Initiator Devices 110 within its coverage area. Alternatively, or in addition thereto, a connection 615 may be between device 600 and a billboard advertisement 620. Other possible LowRate applications may include a food package that transmits a URL address detailing nutritional information to an Initiator device 110, a lock that communicates with a digital key or a lamp that communicates with a LowRate enabled Personal Digital Assistant. In short, StandAlone devices 600 may be everyday consumer devices for which low power consumption is an important design parameter.

Figure 6B illustrates an exemplary operation topology of a DualMode LowRate device 650. The DualMode device 650 includes both a LowRate protocol capability and another short-range wireless capability such as Bluetooth. Thus, the DualMode device 650 can establish a LowRate connection 675 with, e.g., a billboard advertisement, as discussed above in connection with Figure 5. However, the DualMode device 650 is also capable of establishing a Bluetooth connection 665 with a device 660 such as a Bluetooth enabled personal computer having an internet access capability. DualMode devices 650 are typically not as concerned with power consumption due to the existing Bluetooth system power requirements, which are significantly greater than the level of power consumption associated with a LowRate device.

Figure 7A illustrates an exemplary use of a random mean zero value offset with carrier sensing when a first Service Advertiser 705 offsets its transmission frame later in time from an application-specific transmission interval 720 and its transmission is detected by a second Service Advertiser 701 in one embodiment of the present invention.

A timeline 710 with an arrow indicating the direction of increasing time is shown in Figure 7A. Service Advertiser LowRate devices 701-705 are shown in Figure 7A as transmitting service advertisements over time. The Service Advertisers 701-705 are within a specified proximity of one another such that the carrier sensing of Service Advertiser 701 would recognize the transmissions of any of the other Service Advertisers 702-705, should the transmit modes overlap in time.

As shown in Figure 7A, an exemplary format of a transmission frame 730 includes five modes of operation: carrier sensing mode 715, first switching mode 731, transmission mode 732, second switching mode 733, and reception mode 734. If carrier sensing determines that the Initialisation Channel is IDLE, a Service Advertiser enters the first switching mode 731, as it prepares to enter the third mode of operation, the transmission mode 732. During the transmission mode 732, a Service Advertiser transmits the identification message ID_INFO 545 to advertise that additional information or specific services are available. The Service Advertiser enters a second switching mode 733 after the ID_INFO message is sent 545, as it switches between transmission and reception modes. During the reception mode 734, the Service Advertiser listens for the message ID_INFO_RESP 560 on the Initialisation channel as transmitted by an Initiator device 110 to request services or additional data from the Service Advertiser. The Service Advertiser may enter a sixth mode -- namely, a sleep mode, if there is time remaining before the next transmission frame is scheduled.

In order for carrier sensing to be an effective method of avoiding collisions, a first Service Advertiser should conduct carrier sensing at a different time than a second advertiser, preferably while the second Service Advertiser is transmitting. In this event, the carrier sensing will detect a level of energy associated with a transmission as being, e.g., above a predetermined threshold and execute a predetermined action or set of actions in accordance with one embodiment of the present invention. Such actions may involve either executing the next mode of the transmission frame, reattempting carrier sensing, tuning to an alternate Initialisation channel or any combination thereof. However, if a first Service Advertiser conducts carrier sensing at the same instant in time that a second Service Advertiser conducts carrier sensing, or is otherwise preparing to transmit, the Initialisation channel will be IDLE during both carrier sensing periods, and thus, neither of the Service Advertisers will recognize that the other is transmitting. Consequently, their transmissions will result in collisions, the loss of the transmitted data, and thus unnecessary power consumption.

In order to increase the likelihood that devices with similar transmission frames will recognize each other's transmissions, an offset with a random mean zero value is incorporated into the time associated with the start of carrier sensing as will be discussed in detail hereinafter. Each Service Advertiser incorporates the random mean zero value offset into the timing of carrier sensing at the start of a transmission frame. The random mean zero value offset, as shown with regard to reference numeral 740 in Figure 7A, illustrates that a Service Advertiser can shift its transmission frame later in time, with respect to a predetermined application-specific transmission frame interval to achieve a random mean zero value offset that avoids collisions. Alternatively, as shown in Figure 7B, a Service Advertiser 754 can shift its transmission frame earlier in time as shown by random mean zero value offset 790. In one embodiment the offset time is selected from a random distribution of values derived from a fraction of the length of time that it takes for a device to switch between the transmission and reception modes. Alternately, the distribution of values may be derived from other device-specific timing characteristics or empirical data.

It is also to be understood that the illustrations of Figure 5, 7A, 7B, 8, and 9 and descriptions thereof, for the sake of illustrating functionality associated with carrier sensing, assume that the only energy on the operating band is being transmitted by the illustrated Service Advertisers. In a real world environment, carrier sensing acts to measure the RSSI, detecting various emissions at a given the frequency, regardless of the sources of the emissions. In some instances it is possible for LowRate channels to become congested or jammed by various other devices that transmit in the LowRate operating frequency spectrum such as microwave ovens, cordless telephones, or the transmissions of WLAN or Bluetooth devices.

In a first exemplary case illustrated in Figure 7A, Service Advertisers 701 and 702 have periods of carrier sensing 715, 716 that start 720 and end 721 at the same time. Accordingly, both devices will measure the Received Signal Strength Indication (RSSI) on the primary Initialisation channel and determine that it is IDLE. After determining that the primary Initialisation channel is IDLE, both Service Advertisers 701, 702 will attempt to transmit on it, resulting in transmission collisions.

With respect to Service Advertisers 703 and 704, even though the periods of carrier sensing 717, 718 implement random mean zero value offsets from Service Advertiser 701, both periods of carrier sensing will indicate that the channel is IDLE, because no LowRate device is transmitting on an Initialisation channel during those periods of carrier sensing. Consequently, the resulting transmissions of Service Advertisers 703 and 704, like those of Service Advertiser 701 and 702, will also experience collisions.

In contrast, the period of carrier sensing 719 associated with Service Advertiser 705, which starts at time 722 incorporates a random mean zero value offset indicated by reference numeral 740. Carrier sensing 719 coincides with the start of the transmission period of Service Advertiser 701, and ends at time 723. Carrier sensing 719 will result in Service Advertiser 705 recognizing that Service Advertiser 701 is transmitting on the Initialisation channel and determining that the Initialisation channel is therefore BUSY. Consequently, Service Advertiser 705 will delay its transmission frame in time to avoid a collision.

Figure 7B illustrates an exemplary use of random mean zero value offsets with carrier sensing when a first Service Advertiser 751 with an application-specific transmission frame interval detects a second Service Advertiser 754 which has offset its transmission frame interval earlier in time as indicated by reference numeral 790 in an embodiment of the present invention. As in the embodiment of Figure 7A, the Service Advertisers 751-754 are within a specified proximity of one another, such that the carrier sensing of Service Advertiser 751 would recognize the transmissions of any of the other Service Advertisers (752, 753, 754) in the event that the transmissions overlap in time. In the embodiment of Figure 7B, Service Advertiser 754 incorporates a random mean zero value offset indicated by reference numeral 790 and conducts carrier sensing 765 at time 770 and thus, will be the first of the four devices 751-754 to transmit on the primary Initialisation channel. After measuring the RSSI on the primary Initialisation channel during carrier sensing, Service Advertiser 754 determines that the channel is IDLE. The transmission frame associated with Service Advertiser 754 is followed sequentially by transmission frames corresponding to Service Advertisers 753, 752, and 751, respectively. Service Advertiser 752 and Service Advertiser 753 conduct carrier sensing while Service Advertiser 754 is in switching mode 766 preparing to transmit. Consequently, both devices will incorrectly determine that the Initialisation channel is IDLE and attempt to transmit, leading to transmission collisions between Service Advertisers 754, 753, and ultimately with Service Advertiser 752.

Service Advertiser 751 conducts carrier sensing 780 at time 771, which occurs just after Service Advertiser 754 has started to transmit at time 771. Accordingly, Service Advertiser 751 will detect that Service Advertiser 754 has begun transmitting, and determine that the primary Initialisation channel is BUSY. Service Advertiser 751 will then delay its transmission frame in time to avoid a collision.

In summary, Figures 7A and 7B illustrate that transmission collisions may be avoided by implementing a random mean zero value offset that shifts the transmission frame of Service Advertisers either later or earlier in time to increase the likelihood that a Service Advertiser's carrier sensing will effectively recognize the transmissions of another Service Advertiser.

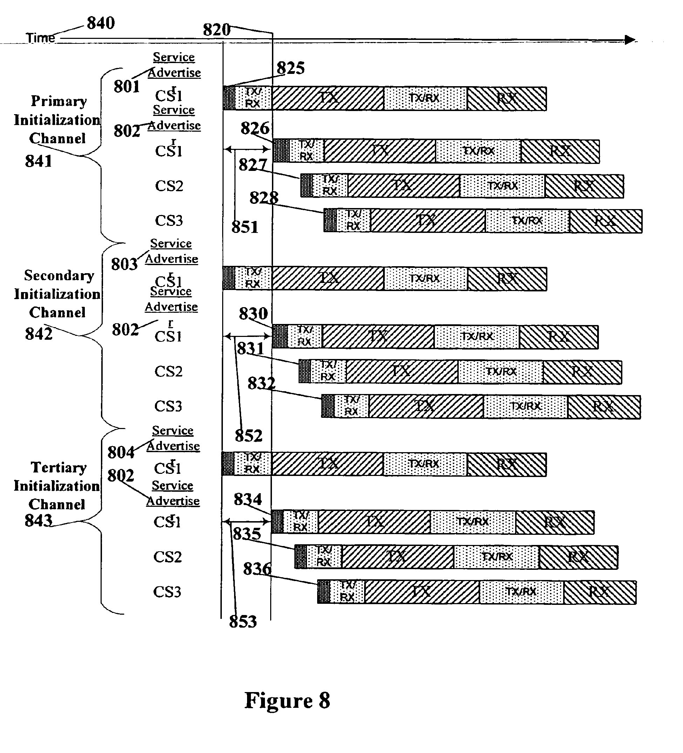

Figure 8 illustrates an exemplary use of a random mean zero value offset with carrier sensing in which a second Service Advertiser 802 detects a first Service Advertiser 801 by implementing a random mean zero value offset 851, which offsets the second Service Advertiser's transmission frame later in time from an application-specific transmission frame interval. The second Service Advertiser 802 upon designating the primary Initialisation channel 841 as BUSY, in turn, cycles through alternate Initialisation channels attempting to find an IDLE channel. The random mean zero value offset 851 is shown in Figure 8 is the difference in time between the start of carrier sensing periods 825 and 826. In one embodiment, a Service Advertiser may bypass a congested Initialisation channel, by switching to a secondary Initialisation channel (such as the one shown in Figure 3B) in the event that a predetermined number of attempted transmissions (e.g., three) on the primary Initialisation channel are unsuccessful.

As illustrated in Figure 8, a timeline 840 indicates the direction of increasing time. Service Advertiser 801 conducts carrier sensing as specified by reference numeral 825 and prepares to transmit on primary Initialisation channel 841 at time 820. Service Advertiser 802 conducts carrier sensing 826 offset in time by a random mean zero value 851, after Service Advertiser 801 has begun to transmit. Consequently, Service Advertiser 802 will detect that Service Advertiser 801 is transmitting on the primary Initialisation channel 841 and after a predetermined delay will repeat carrier sensing a second and a third time (827, 828), each time, however, determining that the primary Initialisation channel 841 is BUSY. In the embodiment of Figure 8, Service Advertiser 802 may then tune to the secondary Initialisation channel 842 in an attempt to establish a communication link with an Initiator device 110 that is actively listening for service advertisements on the secondary Initialisation channel.

As further shown in Figure 8, after conducting carries sensing on the second Initialisation channel offset by a random mean zero value 852, Service Advertiser 802 may find that Service Advertiser 803 is already transmitting on that channel. Service Advertiser 802 will then reattempt carrier sensing (831, 832) after a predetermined delay and again determines that the channel is BUSY. Service Advertiser 802 may tune to yet a tertiary Initialisation channel 843 and again reattempt a transmission. After conducting carrier sensing (834, 835, 836) initially offset by a value 853 during a time period when Service Advertiser 804 is transmitting, Service Advertiser 802 concludes that the tertiary Initialisation channel 843 is also BUSY. Service Advertiser 802 will then cycle back to the primary Initialisation channel 841 and reattempt carrier sensing on that channel. If the channel 841 is determined to be BUSY, Service Advertiser 802 will continue to cycle through the alternate Initialisation channels 842 and 843 until an Initialisation channel is determined by carrier sensing to be IDLE, at which time the Service Advertiser 802 may begin transmitting.

It is to be understood that the predetermined number of Initialisation channels may vary by application and that different cycling schemes may be implemented. Additionally, it is to be understood that the number of attempts of carrier sensing executed on an initialisation channel before reattempting transmission on an alternate initialisation channel may vary. Moreover, the random mean zero offset is generated from a distribution of values that may be application or device specific.

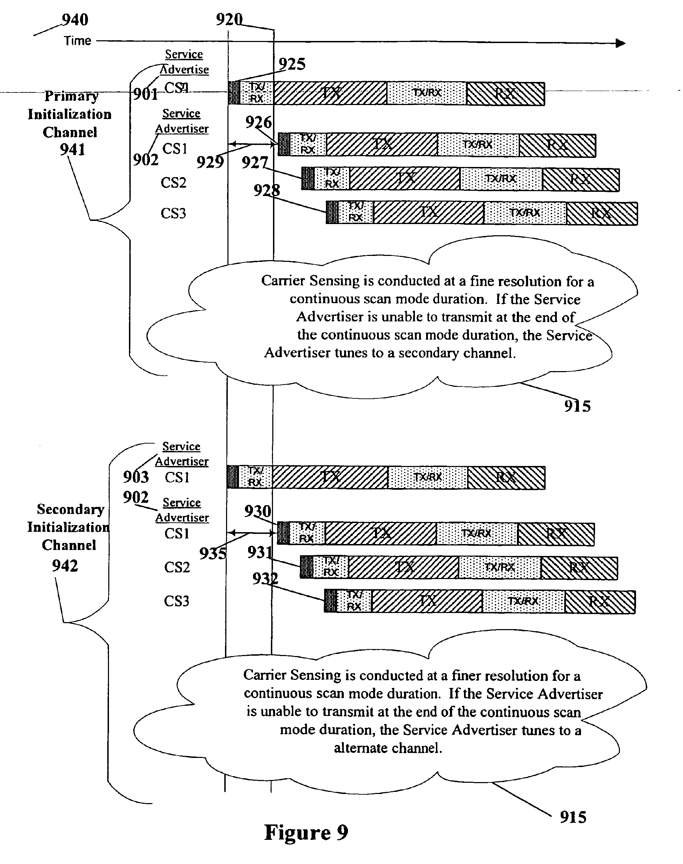

Figure 9 illustrates an exemplary use of an offset with carrier sensing in which a first Service Advertiser's 901 transmissions are detected by a second Service Advertiser 902 which, in turn, enters a continuous scan mode. Once again, a timeline 940 indicates the direction of increasing time. As shown in Figure 9, Service Advertiser 901 conducts carrier sensing 925, establishes that the primary Initialisation channel 941 is IDLE and begins to transmit at time 920. Service Advertiser 902 repeatedly conducts carrier sensing (926, 927, and 928) initially offset by random mean zero value 929 after Service Advertiser 901 has begun to transmit. After three consecutive BUSY carrier sensing attempts (926, 927, and 928) on the primary Initialisation channel Service Advertiser 902 enters a continuous scan mode to increase the likelihood of transmission of its service advertisements.

In the continuous scan mode 915, Service Advertiser 902 conducts carrier sensing repeatedly at a given frequency (e.g. every 1 ms), during a given continuous scan mode duration (e.g. 200 ms). The carrier sensing frequency in continuous scan mode is application-specific. Accordingly, Service Advertiser 902 may implement a carrier sensing frequency that is faster, slower, or the same as that which is illustrated in Figure 9. Alternatively, the carrier sensing frequency may either start at a low frequency and increase over time or start at a high frequency and decrease over time. If the RSSI measured during carrier sensing drops below the predetermined threshold value, the continuous carrier sensing is interrupted to transmit the message ID_INFO 520. However, if the RSSI does not drop below the threshold value by the completion of a predetermined continuous scan mode duration, the Service Advertiser 902 will tune to a secondary Initialisation Channel 942.

Once tuned to the secondary Initialisation channel 942, Service Advertiser 902 will conduct carrier sensing (930, 931, and 932) initially offset by a value 935. Upon determining that Service Advertiser 903 is transmitting on the secondary Initialisation channel 942, Service Advertiser 902 will again enter the continuous scan mode 903 to conduct carrier sensing at the predetermined carrier sensing frequency. Accordingly, in the event that Service Advertiser 903 completes transmitting and the Initialisation channel becomes IDLE within the continuous scan mode duration, Service Advertiser 902 may then transmit its service advertisements. If the end of the continuous scan mode duration is reached without Service Advertiser 902 successfully transmitting a service advertisement, it may tune to yet an alternate channel or tune back to the primary Initialisation channel. Upon tuning to another Initialisation channel, Service Advertiser 902 will reattempt carrier sensing as discussed above until an opportunity to transmit service advertisements arises.

### Error Handling

In the embodiments discussed above, various aspects of error handling may be implemented. One example of error handling implemented in the LowRate protocol involves Strong Cyclic Redundancy Checks. The process of Cyclic Redundancy Checking (CRC) involves examining data that has been transmitted on a communication link for errors that may have occurred during transmission. The sender applies a polynomial to a block of data designated for transmission and appends the resulting cyclic redundancy code to the data block. The receiver applies the same polynomial to the data after reception and compares the result with the appended result. If the two results are the same, the data has been successfully sent. Otherwise, the receiver may send a request to the sender for retransmission of the data block.

Additional error handling may be provided by the Service Advertiser 120. For example, if the Service Advertiser recognizes an increase in the RSSI level or in the event that the synchronization was successful but the Strong Cyclic Redundancy Check failed, the Service Advertiser 120 may temporarily accelerate the transmission frame interval on the Initialisation channel in a predetermined manner over a predetermined length of time. In particular, the Service Advertiser 120 may increase the transmission frame interval as discussed above in connection with Figure 4 from once every 200 ms to once every 100 ms and maintain that transmission frame rate over a one second interval. In the event that a first Service Advertiser 120 receives an ID_INFO message 545 associated with a second Service Advertiser 120, the first Service Advertiser 120 may shift its advertising period to start a predetermined length of time earlier or later (e.g., 0.5 ms earlier) to avoid collisions.

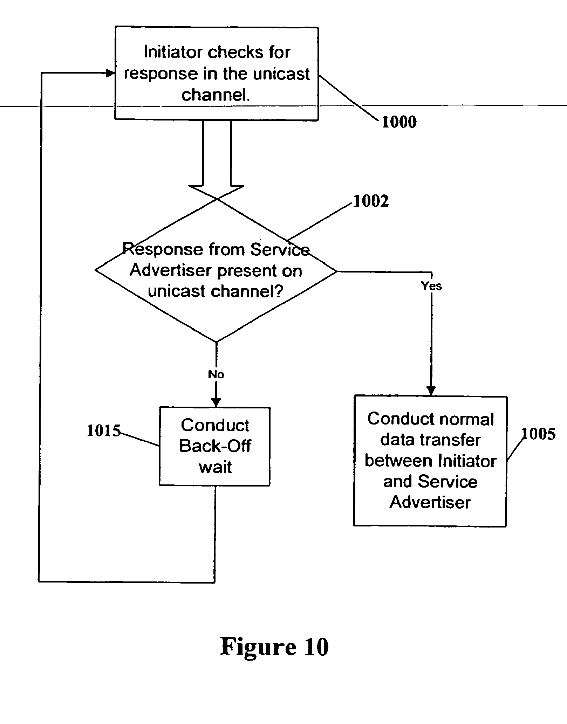

Error handling functionality is not limited to the Service Advertiser 120. The Initiator device 110 may have an active role in recovering from a nonresponse or incorrect response from the Service Advertiser 120 through the use of a Back-Off wait method, which is described in greater detail below in connection with Figure 10. A nonresponse involves the Service Advertiser 120 sending the ID_INFO message 545 and the Initiator device 110 initiating a communication link by transmitting the ID_INFO_RESP message 560 in an attempt at establishing the data transfer in the unicast channel. Accordingly, the Initiator device 110 tunes to the unicast data transfer channel specified in the ID_INFO_RESP message 560 and waits for the DATA_PDU message 575 from the Service Advertiser 120. As the name of the error implies, a nonresponse indicates that the requested DATA_PDU message 575 is not received by the Initiator device 110. In contrast, the Initiator device may identify an incorrect response, by determining that two or more Initiator devices 110 initiated a response to the same ID_INFO message 545. The Initiator device 110 identifies an incorrect response through processing the DATA_PDU message 575 and examining the message header for the destination address. If the Initiator device 110 identifies that the DATA_PDU message 575 contains a destination address not equal to its own destination address the response is designated incorrect. Accordingly, the Initiator device 110 will then conduct the Back-Off wait method described below in an attempt to re-establish a communication link with the Service Advertiser 120.

Figure 10 is a flow chart illustrating an exemplary method by which collision handling may be performed by an Initiator device in accordance with one embodiment of the present invention. In step 1000, after the Initiator Device 110 transmits an ID_INFO_RESP message, it tunes to the designated unicast channel and waits for the Service Advertiser 120 to transmit the DATA_PDU message. In step 1002, the Initiator Device executes certain events based on whether or not the DATA_PDU message is received on the unicast channel. In the event that the DATA_PDU message is received, the normal data transfer between Initiator device 110 and Service Advertiser 120 occurs in step 1005. If, however, the response is not received or is incorrect (wherein, as discussed above, an incorrect response involves a first Initiator device processing a service advertisement with a destination address corresponding to a second Initiator device), the Initiator device 110 executes a Back-Off wait in step 1015. A Back-Off wait comprises selecting a random number x from an initial range and waiting x time periods before reattempting to receive a response from the Service Advertiser 120, as shown in step 1000. In one embodiment, the initial selection range of wait time periods may extend from 1 to 2^(n+1) with n initialized to 1. The variable n represents the nth iteration through the Back-Off wait loop (i.e., steps 1000, 1002, 1015). Incrementing the variable n after successive iterations without receiving a response effectively increases the upper bound of the random number selection range. After selecting a value for x, the device 110 may wait x time periods before reattempting to receive a response from the Service Advertiser 120. The time periods, for example, may be derived from either the length of a full transmission frame from the Service Advertiser 120, the time associated with transmission/reception switching modes, other system specific times, or some arbitrary time values. The method for determining the selection range may take other forms in different embodiments. For instance, the Back-Off selection range may be increased linearly, exponentially, or it may be implemented from some other mathematical formula optimized for a specific application.

The many features and advantages of the present invention are apparent from the detailed specification, and thus, it is intended by the appended claims to cover all such features and advantages of the invention which fall within the scope of the invention as defined by the claims.

Furthermore, since numerous modifications and variations will readily occur to those skilled in the art, it is not denied that the present invention be limited to the exact construction and operation illustrated and described herein.

## Claims

1. A method of operating a device (120) in a wireless communication system, the method comprising:
measuring an energy level on a channel;
comparing (515, 540) a measured value of the energy level to a predefined transmission threshold value to determine whether to transmit a periodic advertisement message (200) on the channel;
transmitting (545, 520) the periodic advertisement message (200) on the channel if the measured value of the energy level is below the predefined transmission threshold value;
**characterised:**
**in that** the wireless communication system is a short range wireless communication system;
**in that** said channel is an initialisation channel (350, 360);
**in that** the measuring step (515) occurs at the beginning of the periodic transmission interval;
by receiving (560) a response (555) to the periodic advertisement message (200) on the initialisation channel (350), the response (555) identifying a unicast channel for data reception; and
by transmitting (570) the requested data (575) over the identified unicast channel.

2. The method of claim 1, further comprising the step of:
repeating the measuring (515, 540) of the energy level on the initialisation channel (350) after a predefined offset time period if the measured value of the energy level is above the predefined threshold value.

3. The method of any preceding claim, wherein said periodic transmission interval is a predefined time interval for transmitting the periodic advertisement message (200) on the initialisation channel (350).

4. The method of claim 3, wherein the predefined time interval is preceded by a random mean zero value offset time (740, 790).

5. The method of claim 4, wherein the random mean zero value offset time (740, 790) has a maximum value substantially equal to a first switching time (722) for preparing the transmission of the periodic advertisement message (200).

6. The method of any preceding claim, wherein the step of measuring (515) the energy level on the initialisation channel (350) comprises conducting carrier sensing on said initialisation channel (350).

7. The method of claim 6, wherein the carrier sensing comprises Carrier Sensing Multiple Access with Collision Avoidance and Frequency Division Multiple Access schemes.

8. The method of claim 2, further comprising the steps of:
transmitting (545) the periodic advertisement message (200) on the initialisation channel (841) if the measured value of the energy level is below the predefined threshold value; and
repeating (827) the measuring of the energy level (826) on the initialisation channel (841) after a predefined offset time period (851) if the measured value of the energy level is above the predefined threshold value.

9. The method of claim 8, further comprising the step of:
changing to an alternate initialisation channel (842) if the measured value of the energy level is above the predefined threshold value.

10. The method of claim 9, further comprising the steps of:
measuring (830) an energy level on the alternate initialisation channel (842) at a beginning of a periodic transmission interval on the alternate initialisation channel (842); and
comparing a measured value of the energy level to a predefined transmission threshold value to determine whether to transmit the periodic advertisement message (200) on the alternate initialisation channel (842).

11. The method of claim 10, further comprising the steps of:
transmitting the periodic advertisement message (200) on the alternate initialisation channel (842) if the measured value of the energy level is below the predefined threshold value; and
repeating (831) the measuring of the energy level on the alternate initialisation channel (831) after a predefined offset time period (852) if the measured value of the energy level is above the predefined threshold value.

12. A method as claimed in any preceding claim, further comprising the step of, in a continuous scan mode (915), conducting carrier sensing repeatedly up until the end of a predetermined continuous scan mode duration, unless the carrier sensing reveals an energy level below the threshold value, wherein the carrier sensing is interrupted and the advertisement message (200) is transmitted on the initialisation channel (350).

13. A method as claimed in any preceding claim, a short range wireless device communicating on a communication link by a method comprising:
establishing a communication link on an initialisation channel (350);
tuning from an initialisation channel (350) to a unicast channel; and
re-establishing the communication link on the initialisation channel (350) in the event of a data transmission error on the unicast channel, wherein said re-establishing comprises:
selecting a random number from an initial range of values, said random number corresponding to a number of wait time periods a receiving device (120) will wait before attempting to re-establish a connection;
waiting for a length of time equal to the number of wait time periods; and
in the event that the receiving device (120), after waiting said length of time, does not receive an expected transmission, increasing an upper bound of the initial range.

14. The method of claim 13, wherein the expected transmission comprises additional data and/or services specified in an initial transmission.

15. The method of claim 13 or claim 14, wherein the data transmission error involves a nonresponse.

16. The method of any of claims 13 to 15, wherein the data transmission error involves a incorrect response.

17. The method of any of claims 13 to 16, further comprising reselecting a value and increasing the upper bound repeatedly until the receiving device receives the expected transmission.

18. The method of any of claims 13 to 17, wherein said upper bound is increased exponentially.

19. The method of any of claims 13 to 17, wherein said upper bound is increased linearly.

20. A device operable in a system implementing wireless communication, the device comprising:
a memory having program code stored therein;
a processor operatively connected to said memory for carrying out instructions in accordance with said stored program code;
wherein said program code, when executed by said processor, causes said processor to:
measure an energy level on channel;
compare a measured value of the energy level to a predefined transmission threshold value to determine whether to transmit a periodic advertisement message (200) on the channel;
transmit (545, 520) the periodic advertisement message (200) on the channel if the measured value of the energy level is below the predefined transmission threshold value;
**characterised:**
**in that** the wireless communication system is a short range wireless communication system;
**in that** said channel is an initialisation channel (350, 360);
**in that** the measuring step (515) occurs at the beginning of the periodic transmission interval; and
**in that** the program code causes the processor to:
receive (560) a response (555) to the periodic advertisement message (200) on the initialisation channel (350), the response (555) identifying a unicast channel for data reception; and
transmit (570) the requested data (575) over the identified unicast channel.

21. A device as claimed in claim 20, wherein said program code, when executed by said processor, causes said processor to:
establish a communication link on an initialisation channel (350);
tune from an initialisation channel (350) to a unicast channel; and
re-establish the communication link on the initialisation channel (350) in the event of a data transmission error on the unicast channel, wherein said re-establishing comprises:
selecting a random number from an initial range of wait values, said random number corresponding to a number of wait time periods a receiving device (120) will wait before attempting to re-establish a connection;
waiting for a length of time equal to the number of wait time periods; and
in the event that the receiving device (120) after waiting said length of time, does not receive an expected transmission, increasing an upper bound of the initial range.

22. The device as claimed in claim 21, wherein said program code causes said processor to:
reselect a value; and
increase the upper bound repeatedly until the receiving device receives the expected transmission.

23. A computer-readable medium having computer-executable instructions for performing a method for operating a device in a short range wireless communication system as claimed in any of claims 1 to 19.

## Patentansprüche

1. Verfahren zum Betreiben einer Vorrichtung (120) in einem drahtlosen Kommunikationssystem, wobei das Verfahren umfasst:
Messen eines Energieniveaus auf einem Kanal;
Vergleichen (515, 540) eines gemessenen Werts des Energieniveaus mit einem im voraus festgelegten Übertragungsschwellwert, um zu bestimmen, ob eine periodische Ankündigungsnachricht (200) auf dem Kanal übertragen werden soll;
Übertragen (545, 520) der periodischen Ankündigungsnachricht (200) auf dem Kanal, wenn der gemessene Wert des Energieniveaus unter dem im voraus festgelegten Übertragungsschwellwert liegt;
**gekennzeichnet:**
**dadurch, dass** das drahtlose Kommunikationssystem ein drahtloses KurzstreckenKommunikationssystem ist;
der Kanal ein Initialisierungskanal (350, 360) ist,
der Messschritt (515) zu Beginn des periodischen Übertragungsintervalls stattfindet;
durch Empfangen (560) einer Antwort (555) auf die periodische Ankündigungsnachricht (200) auf dem Initialisierungskanal (350), wobei die Antwort (555) einen Unicast-Kanal zum Datenempfang identifiziert; und
durch Übertragen (570) der angeforderten Daten (575) über den identifizierten Unicast-Kanal.

2. Verfahren nach Anspruch 1, weiter umfassend den Schritt:
Wiederholen des Messens (515, 540) des Energieniveaus auf dem Initialisierungskanals (350) nach einer vorbestimmten Versatz-Zeitspanne, wenn der gemessene Wert des Energieniveaus über dem im voraus festgelegten Schwellwert liegt.

3. Verfahren nach irgendeinem der vorhergehenden Ansprüche, wobei das periodische Übertragungsintervall ein im voraus festgelegtes Zeitintervall zum Übertragen der periodischen Ankündigungsnachricht (200) auf dem Initialisierungskanal (350) ist.

4. Verfahren nach Anspruch 3, wobei dem vorbestimmten Zeitintervall eine zufällige, im Mittel null ergebende, Versatzzeit (740, 790), , vorausgeht.

5. Verfahren nach Anspruch 4, wobei die zufällige, im Mittel null ergebende Versatzzeit (740; 790) einen maximalen Wert aufweist, der im wesentlichen gleich einer ersten Umschaltzeit (722) zum Vorbereiten der Übertragung der periodischen Ankündigungsnachricht (200) ist.

6. Verfahren nach irgendeinem der vorhergehenden Ansprüche, wobei der Schritt des Messens (515) des Energieniveaus auf dem Initialisierungskanal (350) ein Ausführen einer Trägererfassung auf dem Initialisierungskanal (350) umfasst.

7. Verfahren nach Anspruch 6, wobei die Trägererfassung Trägererfassungs-Mehrfachzugriff mit Kollisionsvermeidungs- und Frequenzmehrfachzugriffs-Verfahren umfasst.

8. Verfahren nach Anspruch 2, weiter umfassend die Schritte:
Übertragen (545) der periodischen Ankündigungsnachricht (200) auf dem Initialisierungskanal (841) wenn der gemessene Wert des Energieniveaus unter dem im voraus festgelegten Schwellwert liegt; und
Wiederholen (827) des Messens des Energieniveaus (826) auf dem Initialisierungskanal (841) nach einer im voraus festgelegten Versatzzeitspanne (851), wenn der gemessene Wert des Energieniveaus über dem im voraus festgelegten Schwellwert liegt.

9. Verfahren nach Anspruch 8, weiter umfassend den Schritt:
Wechseln auf einen anderen Initialisierungskanal (842), wenn der gemessene Wert des Energieniveaus über dem im voraus festgelegten Schwellwert liegt.

10. Verfahren nach Anspruch 9, weiter umfassend die Schritte:
Messen (830) eines Energieniveaus auf dem anderen Initialisierungskanal (842) zu Beginn eines periodischen Übertragungsintervalls auf dem anderen Initialisierungskanal (842); und
Vergleichen eines gemessenen Werts des Energieniveaus mit einem im voraus festgelegten Übertragungsschwellwert, um zu bestimmen, ob die periodische Ankündigungsnachricht (200) auf dem anderen Initialisierungskanal (842) übertragen werden soll.

11. Verfahren nach Anspruch 10, weiter umfassend die Schritte:
Übertragen der periodischen Ankündigungsnachricht (200) auf dem anderen Initialisierungskanal (842), wenn der gemessene Wert des Energieniveaus unter dem im voraus festgelegten Schwellwert liegt; und
Wiederholen (831) des Messens des Energieniveaus auf dem anderen Initialisierungskanal (831) nach einer im voraus festgelegten Versatzzeitspanne (852), wenn der gemessene Wert des Energieniveaus über dem im voraus festgelegten Schwellwert liegt.

12. Verfahren nach irgendeinem der vorhergehenden Ansprüche, weiter umfassend den Schritt, in einem kontinuierlichen Abtast-Modus (915) wiederholt eine Trägererfassung auszuführen, bis zu dem Ende einer vorbestimmten Dauer eines kontinuierlichen Abtast-Modus, wenn nicht die Trägererfassung ein Energieniveau unter dem Schwellwert offenbart, wobei dann die Trägererfassung unterbrochen wird und die Ankündigungsnachricht (200) auf dem Initialisierungskanal (350) übertragen wird.

13. Verfahren nach irgendeinem der vorhergehenden Ansprüche, wobei eine drahtlose kurzreichweitige Vorrichtung auf einer Kommunikationsverbindung mittels eines Verfahrens kommuniziert, welches umfasst:
Aufbauen einer Kommunikationsverbindung auf einem Initialisierungskanal (350);
Abstimmen von einem Initialisierungskanal (350) auf einen Unicast-Kanal; und
Wiederaufbauen der Kommunikationsverbindung auf dem Initialisierungskanal (350) für den Fall eines Datenübertragungsfehlers auf dem Unicast-Kanal, wobei das Wiederaufbauen umfasst:
Wählen einer zufälligen Zahl aus einem anfänglichen Wertebereich, wobei die zufällige Zahl einer Anzahl von Wartezeitperioden entspricht, die eine empfangende Vorrichtung (120) wartet, bevor sie versucht, eine Verbindung wiederaufzubauen;
Warten für eine Zeitdauer, die gleich der Anzahl von Wartezeitperioden ist; und
für den Fall, dass die empfangende Vorrichtung (120) nach dem Abwarten dieser Zeitdauer eine erwartete Übertragung nicht empfängt, Erhöhen einer oberen Schranke des anfänglichen Bereichs.

14. Verfahren nach Anspruch 13, wobei die erwartete Übertragung zusätzliche Daten und/oder Dienste umfasst, die in einer anfänglichen Übertragung angegeben wurden.

15. Verfahren nach Anspruch 13 oder 14, wobei der Datenübertragungsfehler ein Nichtantworten einbezieht.

16. Verfahren nach einem der Ansprüche 13 bis 15, wobei der Datenübertragungsfehler eine unrichtige Antwort einschließt.

17. Verfahren nach einem der Ansprüche 13 bis 16, weiter umfassend ein erneutes Wählen eines Werts und wiederholtes Erhöhen der oberen Schranke, bis die empfangende Vorrichtung die erwartete Übertragung empfängt.

18. Verfahren nach einem der Ansprüche 13 bis 17, wobei die obere Schranke exponentiell erhöht wird.

19. Verfahren nach einem der Ansprüche 13 bis 17, wobei die obere Schranke linear erhöht wird.

20. Vorrichtung, die in einem System betreibbar ist, welches drahtlose Kommunikation implementiert, wobei die Vorrichtung umfasst:
einen Speicher, der einen darin gespeicherten Programmcode aufweist;
einen Prozessor, der betriebsfähig mit dem Speicher verbunden ist, um Anweisungen gemäß dem gespeicherten Programmcode auszuführen;
wobei der Programmcode, wenn er von dem Prozessor ausgeführt wird, den Prozessor veranlasst zum:
Messen eines Energieniveaus auf einem Kanal;
Vergleichen eines gemessenen Werts des Energieniveaus mit einem im voraus festgelegten Übertragungsschwellwert, um zu bestimmen, ob eine periodische Ankündigungsnachricht (200) auf dem Kanal übertragen werden soll;
Übertragen (545, 520) der periodischen Ankündigungsnachricht (200) auf dem Kanal, wenn der gemessene Wert des Energieniveaus unter dem im voraus festgelegten Übertragungsschwellwert liegt;
**dadurch gekennzeichnet, dass**
das drahtlose Kommunikationssystem ein drahtloses Kurzstreckenkommunikationssystem ist;
der Kanal ein Initialisierungskanal (350, 360) ist;
der Messschritt (515) zu Beginn des periodischen Übertragungsintervalls stattfindet; und
dass der Programmcode den Prozessor veranlasst zum
Empfangen (560) einer Antwort (555) auf die periodische Ankündigungsnachricht (200) auf dem Initialisierungskanal (350), wobei die Antwort (555) einen Unicast-Kanal für Datenempfang identifiziert; Übertragen (570) der angeforderten Daten (575) über den identifizierten Unicast-Kanal.

21. Vorrichtung nach Anspruch 20, wobei der Programmcode, wenn er von dem Prozessor ausgeführt wird, den Prozessor veranlasst zum:
Aufbauen einer Kommunikationsverbindung auf einem Initialisierungskanal (350);
Abstimmen von einem Initialisierungskanal (350) auf einen Unicast-Kanal; und
Wiederaufbauen der Kommunikationsverbindung auf dem Initialisierungskanal (350) für den Fall eines Datenübertragungsfehlers auf dem Unicast-Kanal, wobei das Wiederaufbauen umfasst:
Wählen einer zufälligen Zahl aus einem anfänglichen Bereich von Wartewerten, wobei die zufällige Zahl einer Anzahl von Wartezeitperioden entspricht, welche eine empfangende Vorrichtung (120) wartet, bevor sie versucht, eine Verbindung wiederaufzubauen;
Warten einer Zeitdauer, die gleich der Anzahl von Wartezeitperioden ist; und
für den Fall, dass die empfangende Vorrichtung (120) nach dem Abwarten der Zeitdauer eine erwartete Übertragung nicht empfängt, Erhöhen einer oberen Schranke des anfänglichen Bereichs.

22. Vorrichtung nach Anspruch 21, wobei der Programmcode den Prozessor dazu veranlasst,
erneut einen Wert auszuwählen; und
die obere Schranke wiederholt zu erhöhen, bis die empfangende Vorrichtung die erwartete Übertragung empfängt.

23. Computerlesbares Medium, welches computerausführbare Anweisungen zum Ausführen eines Verfahrens aufweist, um eine Vorrichtung in einem drahtlosen Kurzstreckenkommunikationssystem nach irgendeinem der Ansprüche 1 bis 19 zu betreiben.

## Revendications

1. Procédé de mise en oeuvre d'un dispositif (120) dans un système de communication sans fil, le procédé comprenant :
la mesure d'un niveau d'énergie sur un canal,
la comparaison (515, 540) d'une valeur mesurée du niveau d'énergie à une valeur de seuil de transmission prédéfinie pour déterminer s'il faut transmettre un message d'avertissement périodique (200) sur le canal,
la transmission (545, 520) du message d'avertissement périodique (200) sur le canal si la valeur mesurée du niveau d'énergie est en dessous de la valeur de seuil de transmission prédéfinie,
**caractérisé :**
**en ce que** le système de communication sans fil est un système de communication sans fil à courte portée,
**en ce que** ledit canal est un canal d'initialisation (350, 360),
**en ce que** l'étape de mesure (515) a lieu au début de l'intervalle de transmission périodique,
par la réception (560) d'une réponse (555) au message d'avertissement périodique (200) sur le canal d'initialisation (350), la réponse (555) identifiant un canal à destinataire unique pour une réception des données, et
par la transmission (570) des données demandées (575) sur le canal à destinataire unique identifié.

2. Procédé selon la revendication 1, comprenant en outre l'étape consistant à :
répéter la mesure (515, 540) du niveau d'énergie sur le canal d'initialisation (350) après un intervalle de temps de décalage prédéfini si la valeur mesurée du niveau d'énergie est au-dessus de la valeur de seuil prédéfinie.

3. Procédé selon l'une quelconque des revendications précédentes, dans lequel ledit intervalle de transmission périodique est un intervalle de temps prédéfini pour transmettre le message d'avertissement périodique (200) sur le canal d'initialisation (350).

4. Procédé selon la revendication 3, dans lequel l'intervalle de temps prédéfini est précédé d'un temps de décalage aléatoire à valeur moyenne zéro (740, 790).

5. Procédé selon la revendication 4, dans lequel le temps de décalage aléatoire à valeur moyenne zéro (740, 790) présente une valeur maximum sensiblement égale à un premier temps de commutation (722) pour préparer la transmission du message d'avertissement périodique (200).

6. Procédé selon l'une quelconque des revendications précédentes, dans lequel l'étape de mesure (515) du niveau d'énergie sur le canal d'initialisation (350) comprend l'exécution d'une détection de porteuse sur ledit canal d'initialisation (350).

7. Procédé selon la revendication 6, dans lequel la détection de porteuse comprend des principes d'accès multiples à détection de porteuse avec évitement des collisions et accès multiples par répartition en fréquence.

8. Procédé selon la revendication 2, comprenant en outre les étapes consistant à :
transmettre (545) le message d'avertissement périodique (200) sur le canal d'initialisation (841) si la valeur mesurée du niveau d'énergie est en dessous de la valeur de seuil prédéfinie, et
répéter (827) la mesure du niveau d'énergie (826) sur le canal d'initialisation (841) après un intervalle de temps de décalage prédéfini (851) si la valeur mesurée du niveau d'énergie est au-dessus de la valeur de seuil prédéfinie.

9. Procédé selon la revendication 8, comprenant en outre l'étape consistant à :
passer à un canal d'initialisation différent (842) si la valeur mesurée du niveau d'énergie est au-dessus de la valeur de seuil prédéfinie.

10. Procédé selon la revendication 9, comprenant en outre les étapes consistant à :
mesurer (830) un niveau d'énergie sur le canal d'initialisation différent (842) au début d'un intervalle de transmission périodique sur le canal d'initialisation différent (842), et
comparer une valeur mesurée du niveau d'énergie à une valeur de seuil de transmission prédéfinie pour déterminer s'il faut transmettre le message d'avertissement périodique (200) sur le canal d'initialisation différent (842).

11. Procédé selon la revendication 10, comprenant en outre les étapes consistant à :
transmettre le message d'avertissement périodique (200) sur le canal d'initialisation différent (842) si la valeur mesurée du niveau d'énergie est en dessous de la valeur de seuil prédéfinie, et
répéter (831) la mesure du niveau d'énergie sur le canal d'initialisation différent (831) après un intervalle de temps de décalage prédéfini (852) si la valeur mesurée du niveau d'énergie est au-dessus de la valeur de seuil prédéfinie.

12. Procédé selon l'une quelconque des revendications précédentes, comprenant en outre l'étape consistant à, dans un mode de balayage continu (915), exécuter une détection de porteuse de façon répétitive jusqu'à la fin d'une durée de mode de balayage continu prédéterminée, sauf si la détection de porteuse révèle un niveau d'énergie en dessous de la valeur de seuil, dans lequel la détection de porteuse est interrompue et le message d'avertissement (200) est transmis sur le canal d'initialisation (350).

13. Procédé selon l'une quelconque des revendications précédentes, un dispositif sans fil à courte portée communiquant sur une liaison de communication grâce à un procédé comprenant :
l'établissement d'une liaison de communication sur un canal d'initialisation (350),
l'accord depuis un canal d'initialisation (350) sur un canal à destinataire unique, et
le rétablissement de la liaison de communication sur le canal d'initialisation (350) dans le cas d'une erreur de transmission de données sur le canal à destinataire unique, dans lequel ledit rétablissement comprend :
la sélection d'un nombre aléatoire à partir d'une plage initiale de valeurs, ledit nombre aléatoire correspondant à un nombre de périodes de temps d'attente qu'attendra un dispositif de réception (120) avant de tenter de rétablir une connexion,
l'attente d'un intervalle de temps égal au nombre des périodes de temps d'attente, et
dans le cas où le dispositif de réception (120), après avoir attendu ledit intervalle de temps, ne reçoit pas une transmission prévue, l'augmentation d'une limite supérieure de la plage initiale.

14. Procédé selon la revendication 13, dans lequel la transmission prévue comprend des données et/ou des services supplémentaires spécifiés dans une transmission initiale.

15. Procédé selon la revendication 13 ou la revendication 14, dans lequel l'erreur de transmission de données implique une absence de réponse.

16. Procédé selon l'une quelconque des revendications 13 à 15, dans lequel l'erreur de transmission de données implique une réponse incorrecte.

17. Procédé selon l'une quelconque des revendications 13 à 16, comprenant en outre une nouvelle sélection d'une valeur et l'augmentation de la limite supérieure, de façon répétitive, jusqu'à ce que le dispositif de réception reçoive la transmission prévue.

18. Procédé selon l'une quelconque des revendications 13 à 17, dans lequel ladite limite supérieure est augmentée exponentiellement.

19. Procédé selon l'une quelconque des revendications 13 à 17, dans lequel ladite limite supérieure est augmentée linéairement.

20. Dispositif pouvant être actionné dans un système mettant en oeuvre une communication sans fil, le dispositif comprenant :
une mémoire comportant un code de programme mémorisé dans celle-ci,
un processeur relié de façon fonctionnelle à ladite mémoire pour exécuter des instructions conformément audit code de programme mémorisé,
dans lequel ledit code de programme, lorsqu'il est exécuté par ledit processeur, amène ledit processeur à :
mesurer un niveau d'énergie sur un canal,
comparer une valeur mesurée du niveau d'énergie à une valeur de seuil de transmission prédéfinie pour déterminer s'il faut transmettre un message d'avertissement périodique (200) sur le canal,
transmettre (545, 520) le message d'avertissement périodique (200) sur le canal si la valeur mesurée du niveau d'énergie est en dessous de la valeur de seuil de transmission prédéfinie,
**caractérisé :**
**en ce que** le système de communication sans fil est un système de communication sans fil à courte portée,
**en ce que** ledit canal est un canal d'initialisation (350, 360),
**en ce que** l'étape de mesure (515) a lieu au début de l'intervalle de transmission périodique, et
**en ce que** le code de programme amène le processeur à :
recevoir (560) une réponse (555) au message d'avertissement périodique (200) sur le canal d'initialisation (350), la réponse (555) identifiant un canal à destinataire unique pour une réception de données, et
transmettre (570) les données demandées (575) sur le canal à destinataire unique identifié.

21. Dispositif selon la revendication 20, dans lequel ledit code de programme, lorsqu'il est exécuté par ledit processeur, amène ledit processeur à :
établir une liaison de communication sur un canal d'initialisation (350),
s'accorder depuis un canal d'initialisation (350) sur un canal à destinataire unique, et
rétablir la liaison de communication sur le canal d'initialisation (350) dans le cas d'une erreur de transmission de données sur le canal à destinataire unique, où ledit rétablissement comprend :
la sélection d'un nombre aléatoire à partir d'une plage initiale de valeurs d'attente, ledit nombre aléatoire correspondant à un nombre de périodes de temps d'attente qu'attendra un dispositif de réception (120) avant de tenter de rétablir une connexion,
l'attente d'un intervalle de temps égal au nombre des périodes de temps d'attente, et
dans le cas où le dispositif de réception (120) après avoir attendu ledit intervalle de temps, ne reçoit pas une transmission prévue, l'augmentation d'une limite supérieure de la plage initiale.

22. Dispositif selon la revendication 21, dans lequel ledit code de programme amène ledit processeur à :
sélectionner à nouveau une valeur, et
augmenter la limite supérieure de façon répétitive jusqu'à ce que le dispositif de réception reçoive la transmission prévue.

23. Support lisible par un ordinateur comportant des instructions exécutables par un ordinateur pour exécuter un procédé de mise en oeuvre d'un dispositif dans un système de communication sans fil à courte portée selon l'une quelconque des revendications 1 à 19.
